# EUROPÄISCHE PATENTSCHRIFT

(11) **EP 2 674 295 B1**
(45) Veröffentlichungstag und Bekanntmachung des Hinweises auf die Patenterteilung: **18.02.2015**
(21) Anmeldenummer: 13168731.1
(22) Anmeldetag: 22.05.2013
(51) Int. Cl.: B32B 17/10, B29C 43/00, B29C 59/00, C08J 5/18, C03C 27/12

(54) **Geprägte Kunststofffolien für Verbundverglasungen**
Embossed plastic films for safety glazings
Films de matière plastique texturés pour vitrages composites

(30) Priorität: 13.06.2012 DE 102012209939
(43) Veröffentlichungstag der Anmeldung: 18.12.2013
(73) Patentinhaber: Kuraray Europe GmbH, 65795 Hattersheim (DE)
(72) Erfinder: Rogall, Jan Denis, 53844 Troisdorf (DE); Keller, Uwe, 53177 Bonn (DE)
(74) Vertreter: Kisters, Michael Marcus

(56) Entgegenhaltungen:
- EP-A1- 1 233 007
- EP-A1- 1 876 016

## Beschreibung

Die vorliegende Erfindung betrifft eine Kunststofffolie, die mindestens eine Seite mit einer Oberflächenstruktur aus gestreckten, zueinander versetzten Erhebungen aufweist, sowie die Verwendung dieser Kunststofffolie zur Herstellung von Verbundverglasungen.

### Technisches Gebiet

Die bei der Herstellung von Verbundglaslaminaten eingesetzten Kunststofffolien (Zwischenschichtfolien) weisen üblicherweise eine gezielt aufgebrachte Rauheit auf, da so im Laminierprozess die zwischen den Glasscheiben und der Zwischenschichtfolie eingeschlossene Luft entfernt werden kann.

Zur Einstellung der Rauheit der Zwischenschichtfolien werden häufig Prägeverfahren eingesetzt.

### Stand der Technik

Bei den zahlreichen, im Stand der Technik bekannten Prägeverfahren, wird die Kunststofffolie ein- oder zweiseitig zwischen zwei Walzen mit einem regelmäßigen oder unregelmäßigen Prägemuster versehen. So offenbart EP 1 233 007 A1 die Herstellung einer Zwischenschichtfolie mit einer durch Kanäle gebildeten regelmäßigen Oberflächenstruktur. Die Kanäle sind durch Rippen voneinander getrennt, wobei die Rippen kanalübergreifend Öffnungen aufweisen können. Weiterhin können in den Kanälen Barrieren vorhanden sein, die eine zu schnelle Entlüftung des Laminats verhindern.

Eine ähnliche Kanalstruktur ist in WO 95/19885 beschrieben. Hier weisen beide Seiten der Zwischenschichtfolie eine Kanalstruktur auf, die zur Vermeidung von Moiré-Mustern in einem Winkel > 25° zueinander angeordnet sind. WO 95/19885 offenbart unterbrochene Kanäle zur Entlüftung, die über die Länge der Folie nur an zwei gegenüberliegenden Rändern Entlüftungsmöglichkeiten bieten.

Auch US 6,093,471 beschreibt Zwischenschichtfolien mit einer Oberflächenstruktur aus V-förmigen, ununterbrochenen Rippen, die ein kanalartiges System bilden. Zur Unterdrückung der Eigenadhäsion der Zwischenschichtfolien weisen die V-förmigen Rippen einen bestimmten Krümmungsradius auf.

US 4,452, 840 offenbart Folien mit inselförmigen Erhebungen, die eine schnelle Entlüftung zu allen Seiten der Folie ermöglichen. Bei einem zu schnellen Abschmelzen der Erhebungen besteht bei solchen Oberflächenstrukturen die Gefahr von Teilverschlüssen des Laminats.

Neben guten Entlüftungseigenschaften dürfen die Zwischenschichtfolien bei der Herstellung von Verbundglaslaminaten keine optischen Störstellen hervorrufen, d.h. die Oberflächenstrukturen müssen im Laminierprozess vollständig abschmelzen. Dennoch müssen die Oberflächenstrukturen ein möglichst vollständiges Entweichen der eingeschlossenen Luft ermöglichen, d.h. sie dürfen nicht zu schnell abschmelzen, sondern müssen eine ausreichende mechanische und thermische Stabilität aufweisen.

Die im Stand der Technik beschriebenen Oberflächenstrukturen sind hier noch verbesserungsfähig.

### Aufgabe

Aufgabe der vorliegenden Erfindung war es daher eine Kunststofffolie mit einer Oberflächenstruktur bereit zu stellen, die bei der Herstellung von Verbundglaslaminaten ein gutes Entlüftungsverhalten zeigt.

### Darstellung der Erfindung

Gegenstand der vorliegenden Erfindung ist daher eine Kunststofffolie, die zumindest auf einer Seite eine Oberflächenstruktur aus parallel angeordneten Reihen von isolierten Erhebungen (a) aufweist, wobei die Kunststofffolie auf einem Material der Gruppe weichmacherhaltiges Polyvinylacetal, weichmacherhaltiges Polyvinylbutyral, Ethylen/Vinylacetat-Copolymere, Ethylen/Vinylacetat/Vinylalkohol-Copolymere, teilacetalisiertes Ethylen/Vinylacetat/Vinylalkohol-Copolymer, Polyvinylchlorid und/oder Polyurethan basiert und der Quotient aus Länge und Breite der Erhebungen 2 bis 50 beträgt und die parallel angeordneten Reihen so versetzt zu einander angeordnet sind, dass die Erhebungen einer Reihe periodisch versetzt an die der benachbarten Reihen angrenzen und ein gemeinsames Tal auf Höhe der Grundfläche der Erhebungen besitzen.

Die Kunststofffolie basiert auf den genannten Materialen, d.h. die Kunststofffolie besteht bis auf die üblichen Additive ganz oder weitgehend aus den genannten Materialen.

Der periodische Versatz der Reihen bedeutet, dass die Erhebungen nicht in einem schachbrettartigen Muster angeordnet sind.

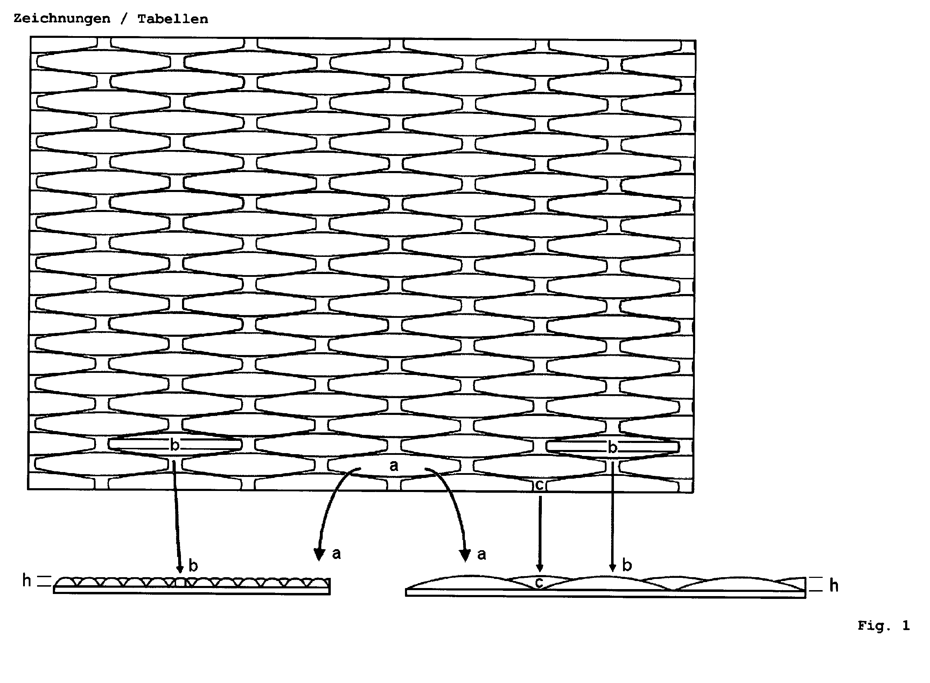

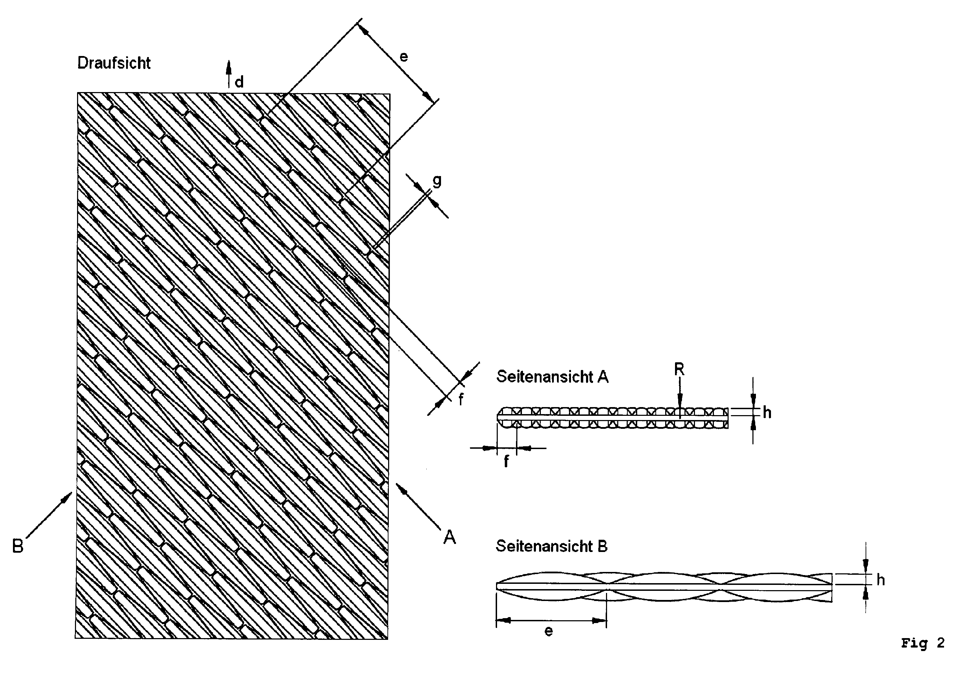

Bevorzugt grenzen die Erhebungen einer ersten Reihe periodisch mit einem Versatz von 10 bis 50% ihrer Länge versetzt an die Erhebungen der beiden benachbarten Reihen. Besonders bevorzugt sind die Erhebungen einer ersten Reihe an die Mitte zwischen zwei Erhebungen der beiden benachbarten Reihen angeordnet. Diese Anordnung ist z.B. in den Figuren 1 und 2 beispielhaft dargestellt. Bei dieser Ausführungsform kann die Anordnung der Erhebung einer ersten Reihe um 1 bis 20 % der Länge der Erhebungen neben der exakten in der Mitte zwischen zwei Erhebungen erfolgen.

Die Erhebungen (a) der erfindungsgemäßen Folien sind isolierte Objekte, d. h. sie sind in und gegen die Laufrichtung der Reihen von einander durch eine Talsohle getrennt. Fig. 1 und 2 zeigen Aufsichten solcher Oberflächenstrukturen.

Die Erhebungen (a) besitzen einen Quotienten von Länge : Breite von 10 bis 2, sodass sich nicht schachbrettartige Muster der Erhebungen wie in US 452840 beschrieben ausbilden, sondern ein netzartiges Wegmuster mit einer Vorzugsrichtung. Die netzartigen Wegmuster der erfindungsgemäßen Folien weisen zwischen den isolierten Erhebungen (a) Querverbindungswege auf, die eine Entlüftung auch gegen die Vorzugsrichtung der Strukturen ermöglicht.

Erfindungsgemäße Folien weisen bei der Herstellung von Verbundglaslaminaten ein besonders gutes Entlüftungsverhalten auf, da die Luft ungehindert in einer durch die parallele Orientierung der gestreckten Erhebungen gegebenen Vorzugsrichtung nahe der Grundfläche abfließen kann. Zusätzlich hierzu kann die Luft seitlich zwischen den Erhebungen entweichen. Dies ist bei einem vorzeitigen Randverschluss des Laminats von Vorteil, da die eingeschlossene Luft noch über andere, offene Randstellen entweichen kann.

Es ist wichtig, dass die im Laminat eingeschlossene Luft zu mehreren Seiten in gleichmäßiger Weise entweichen kann. Durch die erfindungsgemäßen Oberflächenstrukturen wird eine ausreichend schnelle Entlüftung bei gleichzeitig nicht zu schnellem Abschmelzen der Erhebungen wie z.B. bei den inselförmigen Erhebungen auf Folien gemäß US 4,452,840 oder EP 1 233 007 möglich, erreicht.

Durch die periodische Anordnung der gestreckten Erhebungen in benachbarten Reihen der erfindungsgemäßen Folie können beim Abschmelzvorgang Materialanteile jeweils in die daneben befindlichen freien Stellen fließen, was in einem hervorragenden Versiegelungsverhalten der Folie im Laminierprozess resultiert.

Die Oberflächenstrukturen der Folien nach der Erfindung werden durch Prägen auf die Kunststofffolie aufgebracht. Hierzu ist es erforderlich, die zu prägende Struktur als Matrize auf eine Prägewalze aufzubringen und die mehr oder weniger erweichte Kunststofffolie mit einer ausreichenden Kraft auf diese Prägewalze zu pressen. Hierzu geeignete Verfahren sind dem Fachmann bekannt und können z.B. EP 0 741 640 B1, US 5,972,280, US 4,671,913, US 2003/0022015, WO 01/72509, US 6,077,374 oder US 6,093,471 entnommen werden.

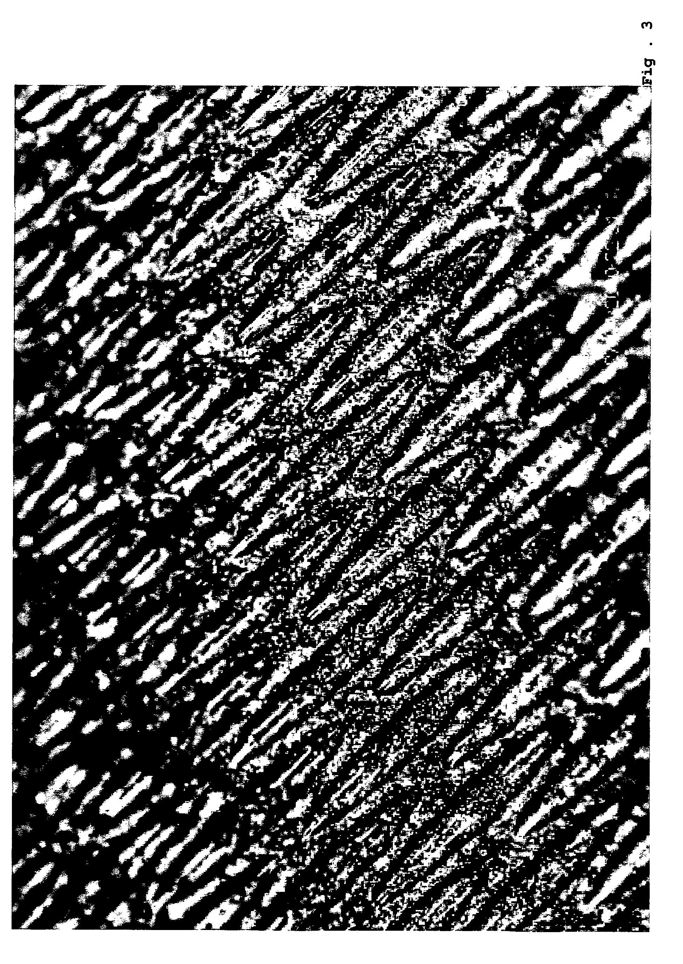

Die erfindungsgemäß eingesetzte Struktur ist schematisch in den Fig. 1 und 2 skizziert. In der Auf- und Seitenansicht sind die gestreckten Erhebungen mit (a) gekennzeichnet. Die gestreckten Erhebungen von benachbarten Reihen erheben sich aus einer gemeinsamen Grundfläche (c), welche nahezu ununterbrochen ist. Die in den Fig. 1; 2; 5; 6 und 7 dargestellten Strukturen sollen lediglich Beispiele für erfindungsgemäß einsetzbare Strukturen darstellen; die vorliegende Erfindung ist nicht auf diese Geometrien beschränkt. Fig. 3 zeigt eine Oberflächenaufnahme einer Prägewalze mit einer Struktur nach Fig. 1.

Die durch Prägung auf die Folie übertragene Oberflächenstruktur besitzt bevorzugt eine Rauheit Rz zwischen 20 und 100 µm, welche größtenteils durch die Scheitelhöhe (h) der Erhebungen bestimmt wird. Dabei kann die Rauhtiefe der Erhebungen mit einer feineren Oberflächenrauheit überlagert sein. Diese - im Folgenden auch als Mikrostruktur bezeichnete - weitaus geringere Rauhtiefe kann je nach Beschichtungstyp zwischen Rz = 1 und 30 µm liegen.

Das Verhältnis (aspect ratio) von Länge zu Breite der auf der Grundfläche angeordneten gestreckten Erhebungen (a) an der Talsohle liegt zwischen 10:1 und 2:1, bevorzugt zwischen 8:1 und 3:1, bevorzugt zwischen 7:1 und 4:1.

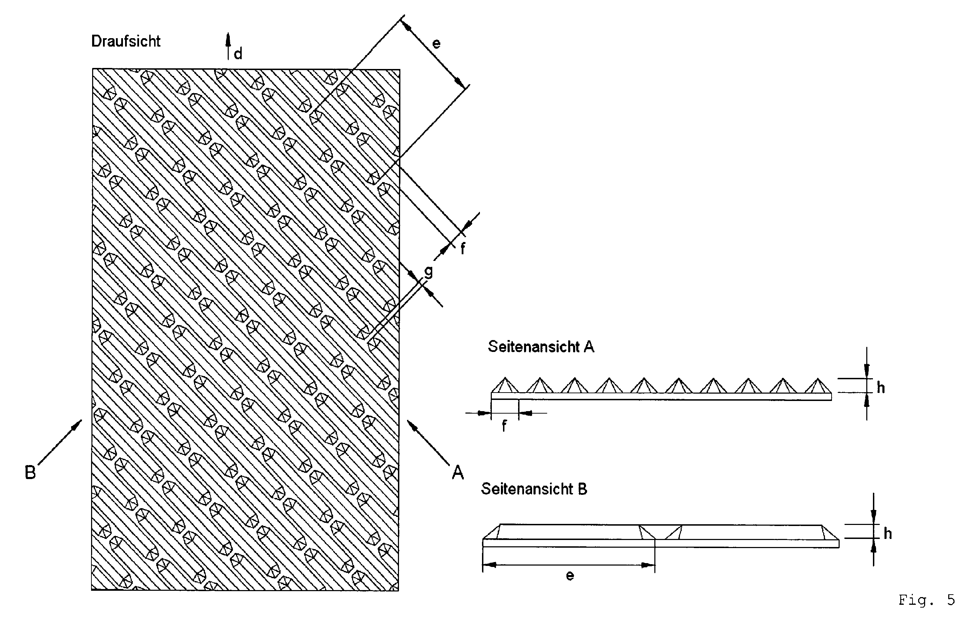

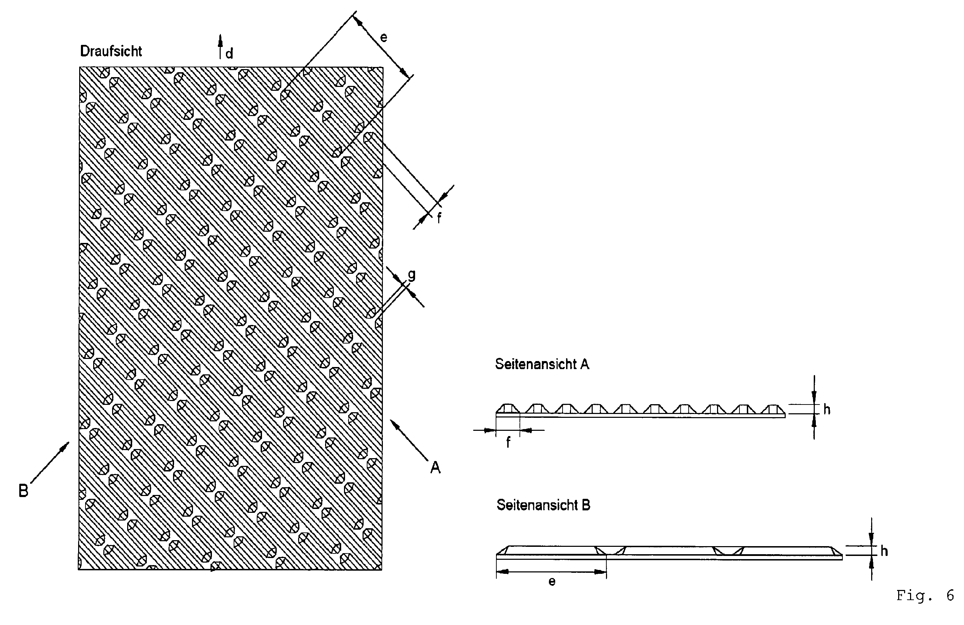

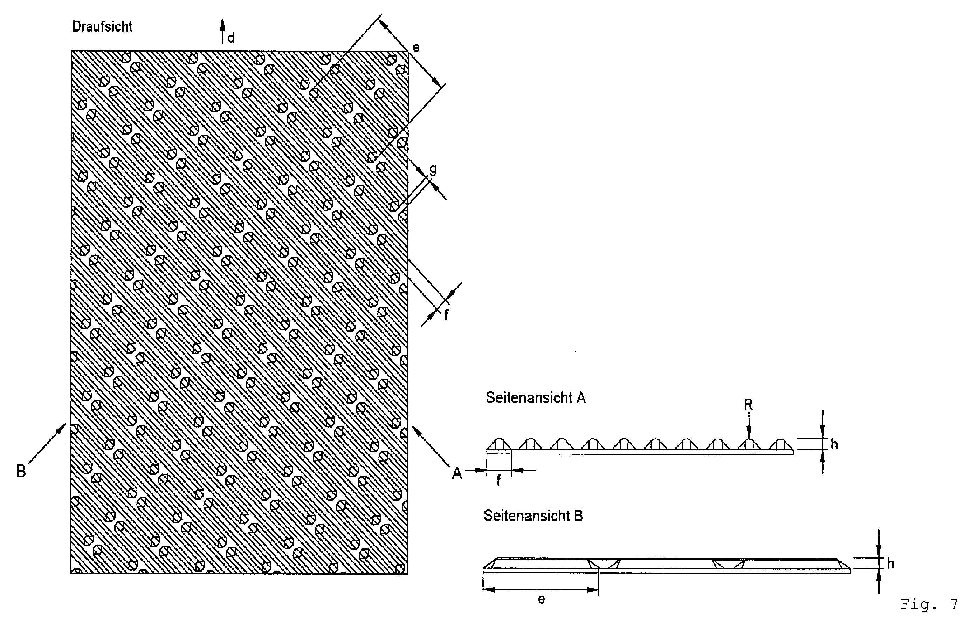

Die Erhebungen (a) können verschiedene geometrische Formen und Grundflächen annehmen, abhängig davon, welche Grundform die gestreckte Erhebung einnimmt. So sind z. B. A) Ellipsen, B) Rauten, C) geradlinige Polygone und D) konvexe Polygone möglich.
A) Im Fall einer ellipsenförmigen Ausführung der gestreckten Erhebungen (a), kann deren Grundfläche einem Schnitt durch die längsseitige Rotationsachse (prolate) eines Rotationsellipsoids entsprechen. Der Grat über die Längsseite der gestreckten Erhebungen hat dabei einen definierten Radius zwischen 15 und 25 µm; bevorzugt 15 µm.
B) Im Fall einer rhombischen Ausführung (Fig. 5) der gestreckten Erhebungen, kann deren Grundfläche einem Schnitt in Längsrichtung eines gestreckten Oktaeders entsprechen.
C) Im Fall einer geradlinigen polygonen Ausführung (Fig. 6) der gestreckten Erhebungen, kann deren Grundfläche einem Schnitt in Längsrichtung eines gestreckten Kuboktaeders entsprechen.
D) Im Fall einer konvexen polygonen Ausführung (Fig. 7) der gestreckten Erhebungen, kann deren Grundfläche einem Schnitt in Längsrichtung eines gestreckten radialen Kuboktaeders entsprechen. Der Grat über die Längsseite der gestreckten Erhebungen hat dabei einen definierten Radius zwischen 15 und 25 µm; bevorzugt 15 µm.

Die gestreckten Erhebungen der Oberflächenstrukturen erfindungsgemäßer Folien sind periodisch versetzt in parallelen Reihen angeordnet. Unter der Laufrichtung dieser Reihen wird im Rahmen der vorliegenden Erfindung die Richtung verstanden, in der sich die Reihen fortsetzen, wie z.B. die in Fig. 1 gekennzeichnete Richtung (A).

Die in Laufrichtung der Reihen bestimmte maximale Länge der gestreckten Erhebungen (e) beträgt 100 bis 2500 µm, bevorzugt 250 bis 2000 µm und insbesondere 500 bis 1500 µm. Die Erhebungen weisen bis auf die üblichen technischen Toleranzen die gleiche Länge auf.

Die gegen die Laufrichtung d. h. in einem 90°-Winkel zu den Reihen bestimmte maximale Breite (f) der Erhebungen beträgt an der Talsohle z. B. 90 bis 580 % der in gleicher Laufrichtung bestimmten Breite der Täler / Talsohlen. Konkret kann die Breite 50 bis 750 µm, bevorzugt 80 bis 500 µm, insbesondere 100 bis 350 µm oder 150 bis 300 µm, bevorzugt 200 bis 300 µm betragen.

Die zwischen angrenzenden Reihen der gestreckten Erhebungen sowie zwischen den gestreckten Erhebungen innerhalb jeder einzelnen Reihe befindliche Grundfläche (c) ist bevorzugt nahezu ununterbrochen, d.h. sie weist einen im Rahmen der Prägetechnik möglichen, glatten Verlauf ohne Barrieren o.ä. auf. Die gegen Laufrichtung der Reihen bestimmte Breite der Talsohle, d.h. der tiefste Punkt zwischen zwei Reihen, soll möglichst gering sein und weist eine maximale Breite von 150 µm, insbesondere von 10 bis 100 µm auf.

Die Erhebungen (a) sind bevorzugt in einer Höhe von 20 bis 100 µm, bevorzugt 30 bis 80 µm und insbesondere 35 bis 60 µm ausgeführt (h in Fig. 1).

Die Erhebungen (a) können eine abgeflachte Halb- oder Teilform eines gestreckten Rotationsellipsoids, einer Raute oder eines konvexen oder geradlinigen Polygons aufweisen, die sowohl symmetrisch als auch asymmetrisch ausgebildet sein kann.

Erfindungsgemäße Kunststofffolien können ein- oder beidseitig mit den genannten Oberflächenstrukturen ausgerüstet sein.

Wenn beide Oberflächen der Kunststofffolie die genannten Oberflächenstrukturen besitzen, so weisen diese einen in der Laufrichtung der Reihen bestimmbaren Winkel (z.B. durch eine fiktive Verbindungslinie über die Erhebungen) gegeneinander auf. Bevorzugt ist in einer Variante der vorliegenden Erfindung ein Winkel von 0 bis 45°, insbesondere 1 bis 45° und in einer weiteren Variante ein Winkel von 45 bis 90°. Mit einem von 0° unterschiedlichen Winkel kann die Bildung von Interferenzmustern im Verbundglaslaminat vermieden werden.

Die erfindungsgemäßen Kunststofffolien weisen in der Praxis eine langgestreckt-rechteckige Geometrie in Form eines Bandes auf. Dies trifft insbesondere auf Folien, die durch Extrusion hergestellt werden, zu. Bei der Weiterverarbeitung der erfindungsgemäßen Kunststofffolien kann es günstig sein, dass die parallel angeordneten Reihen der Oberflächenstrukturen einen von 0° verschiedenen Winkel zur Laufrichtung der Folie einnehmen. Zur Verbesserung der Entlüftungseigenschaften des Laminats beträgt dieser Winkel bevorzugt 10 bis 80°.

Erfindungsgemäße Kunststofffolien werden bevorzugt durch Extrusion eines Polymermaterials basierend auf oder bestehend weitgehend aus einem Material der Gruppe weichmacherhaltiges Polyvinylacetal, weichmacherhaltiges Polyvinylbutyral, Ethylen/Vinylacetat-Copolymere, Ethylen/Vinylacetat/Vinylalkohol-Copolymere, teilacetalisiertes Ethylen/Vinylacetat/Vinylalkohol-Copolymer, Polyvinylchlorid und/oder Polyurethan. Materialien dieser Art sind dem Fachmann bekannt und müssen nicht näher beschrieben werden.

Der Prägeprozess selbst wird in bekannter Weise durchgeführt. Geeignete Prozesse sind in den Europäischen Anmeldungen Nr. 06112159 oder 06112163 beschrieben. Es hat sich in der Praxis bewährt, Folien mit einer möglichst niedrigen Rauheit von Rz 1 bis 30 µm mit der genannten Oberflächenstruktur zu überprägen. Folien dieser Art können durch Extrusion einer Folie unter Schmelzbruchbedingungen z.B. gemäß EP 0185863 erhalten werden.

Erfindungsgemäße Folien weisen hervorragende Entlüftungseigenschaften bei der Herstellung von Verbundglaslaminaten auf. Bevorzugt werden daher die genannten Folien zur Herstellung von Verbundglaslaminaten aus ein oder mehreren Kunststofffolien und mindestens zwei Glas- oder Kunststoffscheiben, insbesondere Windschutzscheiben für Kraftfahrzeuge verwendet. Die Herstellung solcher Verbünde ist dem Fachmann bekannt und kann z.B. in WO 03/033583 nachgelesen werden.

Je nach Entstehungsverfahren der Oberfläche der prägenden Walze sowie je nach Oberflächenstruktur einer optional darauf befindlichen Beschichtung kann den beschriebenen Strukturen der Folienoberfläche eine Mikrostruktur superponiert sein. Hierdurch kann die Klebrigkeit der Folie auf dem Wickel als auch das anfängliche Anhaften an Glasoberflächen beeinflusst werden. Die Anwesenheit einer Mikrostruktur manifestiert sich in einer Glanzmessung in einem niedrigen Meßwert, die Abwesenheit einer Mikrostruktur dagegen in einem höheren Meßwert. Für Folien mit erfindungsgemäß ausgeführten Oberflächen hat es sich bewährt, dass die Mikrostruktur so ausgeführt ist, dass der Folienglanz in einem Bereich < 10, bevorzugt < 6, bevorzugt < 4 und am meisten bevorzugt < 2,5 liegt. Die Bestimmung des Messwertes für den Glanz erfolgt für PVB Folien nach DIN 67530 mit einem Reflektometer Refo 3 der Firma Dr. Lange. Untergrund bei dieser ist eine schwarze PVC-Tafel. Es wird ausschließlich bei 20°C Raumtemperatur und mit einem Einstrahlwinkel von 85° gemessen.

### Beispiele

Es wurde eine weichmacherhaltige PVB-Folie aus 72,5 Gew. % PVB, 27,5 Gew. % 3G8 mit Kalium- und Magnesiumsalzen als Antihaftmittel mit einer beidseitigen Rauheit Rz < 5 µm zwischen einer Anpresswalze aus Gummi und einer Prägewalze, die eine inverse Oberflächenstruktur zu Fig. 2 aufwies, geprägt. Die so erhaltene einseitig geprägte Folie wurde anschließend in einer zweiten Prägestufe mit identischen Eigenschaften auf der zweiten Seite zu einer beidseitig geprägten Folie verarbeitet, bei welcher die Hauptrichtung der Struktur auf Ober- und Unterseite der Folie um 90° zueinander orientiert war. Die Laufrichtung der Struktur war auf beiden Oberflächen um 45° gegen die Extrusionsrichtung der Folie gedreht.

Daten der Anpresswalze mit Gummimantel:
Härte Gummiwalze 70 ± 5 Shore-A
Gummiwalzendurchmesser: 255 mm
Prägewalze (Struktur invers gemäß Fig. 3):
Prägewalzendurchmesser: 245 mm
Höhe der Erhebungen: 65 µm
Breite der Erhebungen: 230 µm
Abstand der Erhebungen in Laufrichtung: 150 µm
Breite der Grundfläche zwischen den Erhebungen: 60 µm

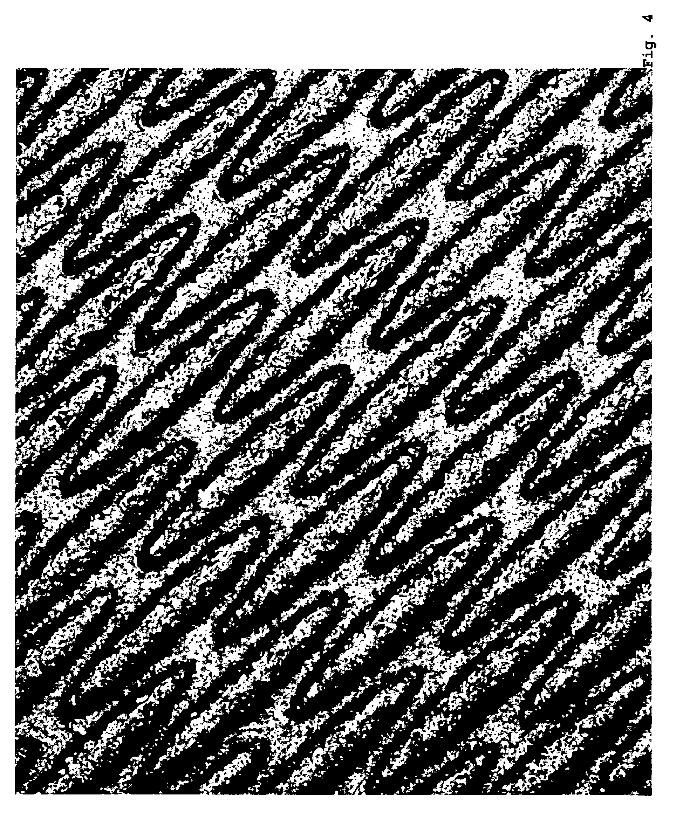

Fig. 4 zeigt eine Oberflächenaufnahme einer so erhaltenen Folie. Die Folie wies eine Rauheit Rz von 60 µm, einen Glanz von 2,2 und eine Mikrostruktur Rz von 15 µm auf.

Die erfindungsgemäße Folie wurde anschließend zwischen zwei Glasscheiben der Stärke 2 mm gelegt und über 20 min. bei Raumtemperatur und anschließend jeweils 25 min bei 75 °C bzw. 95 °C im Vakuumsack bei 200 mbar absolut zu einem nahezu transparenten Vorverbund verarbeitet.

Zum Vergleich wurde Folien mit einer durch Schmelzbruch erzeugten unregelmäßigen Oberflächenstruktur mit einer mittleren Rauhtiefe von 40 µm (z.B. gemäß EP 0 185 863) dem gleichen Vorverbundprozess unterzogen.

Tab. 1 zeigt Anteile durchsichtiger Bereiche von Vorverbünden die mit erfindungsgemäßen Folien erhalten wurden. Die Vorverbünde waren nahezu transparent und wiesen keine Blasen oder Trübungen auf.

Demgegenüber zeigt Tab. 2 Anteile durchsichtiger Bereiche aus Vorverbünden, hergestellt aus Folie mit Schmelzbruchoberfläche. Die Vorverbünde enthielten in Bereichen mikroskopisch kleine Luftblasen und waren an diesen Stellen entsprechend trüb.

Die geprägte Folie wies bei der Verbundglasherstellung im Vergleich zu einer Folie mit unregelmäßiger Schmelzbruchoberfläche erheblich verbesserte Entlüftungseigenschaften auf. Eingeschlossene Luft kann in der Anwendung zu Defekten (z.B. Blasen) im endgültigen Verbundglas führen. Bei den mit erfindungsgemäßen Folien hergestellten Vorverbünden befindet sich bereits nach dem genannten Vorverbundschritt dagegen so gut wie keine Luft mehr (d.h. Trübungen), womit die Gefahr einer Blasenbildung praktisch ausgeschlossen werden kann.

**Tab. 1**

| Vorverbundtemperatur in °C | trüber Flächenanteil in % der Gesamtfläche |
|---|---|
| 75 | 10 |
| 95 | 0 |

**Tab. 2**

| Vorverbundtemperatur in °C | trüber Flächenanteil in % der Gesamtfläche |
|---|---|
| 75 | 45 |
| 95 | 31 |

## Patentansprüche

1. Kunststofffolie, die zumindest auf einer Seite eine Oberflächenstruktur aus parallel angeordneten Reihen von isolierten Erhebungen (a) aufweist, **dadurch gekennzeichnet, dass** die Kunststofffolie auf einem Material der Gruppe weichmacherhaltiges Polyvinylacetal, weichmacherhaltiges Polyvinylbutyral, Ethylen/Vinylacetat-Copolymere, Ethylen/Vinylacetat/Vinylalkohol-Copolymere, teilacetalisiertes Ethylen/Vinylacetat/Vinylalkohol-Copolymer, Polyvinylchlorid und/oder Polyurethan basiert und der Quotient aus Länge und Breite der Erhebungen 2 bis 50 beträgt und die parallel angeordneten Reihen so versetzt zu einander angeordnet sind, dass die Erhebungen einer Reihe periodisch versetzt an die der benachbarten Reihen angrenzen und ein gemeinsames Tal auf Höhe der Grundfläche der Erhebungen besitzen.

2. Kunststofffolie nach Anspruch 1, **dadurch gekennzeichnet, dass** die Erhebungen einer ersten Reihe periodisch mit einem Versatz von 10 bis 50% ihrer Länge versetzt an die Erhebungen der beiden benachbarten Reihen angrenzen.

3. Kunststofffolie nach Anspruch 1 oder 2, **dadurch gekennzeichnet, dass** die gegen die Laufrichtung der Reihen bestimmte Breite der Erhebungen (a) 90 bis 580 % der in gleicher Laufrichtung bestimmten Breite der Täler beträgt.

4. Kunststofffolie nach einem der Ansprüche 1 bis 3, **dadurch gekennzeichnet, dass** die zwischen zwei Reihen gebildete Talsohle (c) nahezu ununterbrochen ist und eine gegen die Laufrichtung der Reihen bestimmte maximale Breite von 150 µm aufweist.

5. Kunststofffolie nach einem der Ansprüche 1 bis 4, **dadurch gekennzeichnet, dass** die Erhebungen (a) eine Höhe von 20 - 100 µm aufweisen.

6. Kunststofffolie nach einem der Ansprüche 1 bis 5, **dadurch gekennzeichnet, dass** die Erhebungen (a) eine maximale Breite an der Talsohle von 50 - 750 µm aufweisen.

7. Kunststofffolie nach einem der Ansprüche 1 bis 6, **dadurch gekennzeichnet, dass** die Erhebungen (a) eine gestreckte polyedrische oder ellipsoide Geometrie besitzen.

8. Kunststofffolie nach einem der Ansprüche 1 bis 7, **dadurch gekennzeichnet, dass** die Erhebungen (a) eine polygonale oder ellipsenförmige Grundfläche besitzen.

9. Kunststofffolie nach einem der Ansprüche 1 bis 8, **dadurch gekennzeichnet, dass** die parallel angeordneten Reihen zur Laufrichtung der Folie einen Winkel von 10 bis 80° einnehmen.

10. Kunststofffolie nach einem der Ansprüche 1 bis 9, **dadurch gekennzeichnet, dass** beide Oberflächen der Kunststofffolie die Oberflächenstruktur aufweisen.

11. Kunststofffolie nach Anspruch 10, **dadurch gekennzeichnet, dass** die parallel angeordneten Reihen der beiden Oberflächen der Kunststofffolie zueinander einen Winkel von 0 bis 45° aufweisen.

12. Kunststofffolie nach Anspruch 10, **dadurch gekennzeichnet, dass** die parallel angeordneten Reihen der beiden Oberflächen der Kunststofffolie zueinander einen Winkel von 45 bis 90° zueinander aufweisen.

13. Kunststofffolie nach einem der Ansprüche 1 bis 12 **dadurch gekennzeichnet, dass** die Folien einen Glanz von < 10, bestimmt nach DIN 67530 besitzen.

14. Verwendung der Kunststofffolie gemäß einem der Ansprüche 1 bis 14 zur Herstellung von Verbundglaslaminaten.

## Claims

1. A plastics film, which at least on one side has a surface structure formed from rows of isolated elevations (a) arranged in parallel, **characterised in that** the plastics film is based on a material from the group of plasticiser-containing polyvinyl acetal, plasticiser-containing polyvinyl butyral, ethylene/vinyl acetate copolymers, ethylene/vinyl acetate/vinyl alcohol copolymers, partially acetalised ethylene/vinyl acetate/vinyl alcohol copolymer, polyvinyl chloride and/or polyurethane and the quotient of length and width of the elevations is 2 to 50 and the rows arranged in parallel are arranged offset in relation to one another such that the elevations of a row border the adjacent rows in a periodically offset manner and have a common valley at the height of the base area of the elevations.

2. The plastics film according to Claim 1, **characterised in that** the elevations of a first row border the elevations of the two adjacent rows in a periodically offset manner with an offset from 10 to 50 % of the length thereof.

3. The plastics film according to Claim 1 or 2, **characterised in that** the width of the elevations (a) determined against the direction of extension of the rows is 90 to 580 % of the width of the valleys determined in the same direction of extension.

4. The plastics film according to one of Claims 1 to 3, **characterised in that** the valley floor (c) formed between two rows is practically uninterrupted and a maximum width determined against the direction of extension of the rows is 150 µm.

5. The plastics film according to one of Claims 1 to 4, **characterised in that** the elevations (a) have a height of 20-100 µm.

6. The plastics film according to one of Claims 1 to 5, **characterised in that** the elevations (a) have a maximum width at the valley floor of 50-750 µm.

7. The plastics film according to one of Claims 1 to 6, **characterised in that** the elevations (a) have a stretched polyhedral or ellipsoidal geometry.

8. The plastics film according to one of Claims 1 to 7, **characterised in that** the elevations (a) have a polygonal or elliptical-shaped base area.

9. The plastics film according to one of Claims 1 to 8, **characterised in that** the rows arranged in parallel assume an angle from 10 to 80° to the direction of extension of the film.

10. The plastics film according to one of Claims 1 to 9, **characterised in that** both surfaces of the plastics film have the surface structure.

11. The plastics film according to Claim 10, **characterised in that** the rows arranged in parallel of the two surfaces of the plastics film have an angle to one another from 0 to 45°.

12. The plastics film according to Claim 10, **characterised in that** the rows arranged in parallel of the two surfaces of the plastics film have an angle to one another from 45 to 90°.

13. The plastics film according to one of Claims 1 to 12, **characterised in that** the films have a gloss of ≤ 10, determined in accordance with DIN 67530.

14. Use of the plastics film according to one of Claims 1 to 14 for producing laminated glass laminates.

## Revendications

1. Feuille en matière plastique comportant, au moins sur une face, une structure de surface constituée de rangées en disposition parallèle de parties surélevées (a) isolées, **caractérisée en ce que** la feuille en matière plastique est à base d'un matériau issu du groupe de poly(acétal de vinyle) contenant des plastifiants, de poly(butyral de vinyle) contenant des plastifiants, de copolymères d'éthylène / acétate de vinyle, de copolymères d'éthylène / acétate de vinyle / alcool vinylique, de copolymère d'éthylène / acétate de vinyle / alcool vinylique partiellement transformé en acétal, de polychlorure de vinyle et/ou de polyuréthane, et les parties surélevées présentent un quotient de la longueur divisée par la largeur compris entre 2 et 50, et les rangées en disposition parallèle étant disposées en quinconce de manières à ce que les parties surélevées d'une rangée soient juxtaposées à celles des rangées voisines selon un décalage périodique et possèdent une vallée commune au niveau du plan de base des parties surélevées.

2. Feuille en matière plastique selon la revendication 1, **caractérisée en ce que** les parties surélevées d'une première rangée sont juxtaposées aux parties surélevées des deux rangées voisines selon un décalage représentant 10 à 50 % de leur longueur.

3. Feuille en matière plastique selon les revendications 1 ou 2, **caractérisée en ce que** la largeur des parties surélevées (a), déterminée dans un sens transversal aux rangées, représente 90 à 580 % de la largeur des vallées, déterminée dans le même sens.

4. Feuille en matière plastique selon l'une des revendications 1 à 3, **caractérisée en ce que** le fond de vallée (c) formé entre deux rangées est quasiment ininterrompu et présente une largeur maximale de 150 µm, déterminée dans un sens transversal aux rangées.

5. Feuille en matière plastique selon l'une des revendications 1 à 4, **caractérisée en ce que** les parties surélevées (a) présentent une hauteur de 20 à 100 µm.

6. Feuille en matière plastique selon l'une des revendications 1 à 5, **caractérisée en ce que** les parties surélevées (a) présentent une largeur maximale de 50 à 750 µm, à partir du fond de vallée.

7. Feuille en matière plastique selon l'une des revendications 1 à 6, **caractérisée en ce que** les parties surélevées (a) possèdent une géométrie allongée de forme polyédrique ou ellipsoïde.

8. Feuille en matière plastique selon l'une des revendications 1 à 7, **caractérisée en ce que** les parties surélevées (a) possèdent un plan de base de forme polygonale ou ellipsoïde.

9. Feuille en matière plastique selon l'une des revendications 1 à 8, **caractérisée en ce que** les rangées en disposition parallèle forment avec le sens de fabrication de ladite feuille un angle compris entre 10 et 80°.

10. Feuille en matière plastique selon l'une des revendications 1 à 9, **caractérisée en ce que** les deux faces de la feuille en matière plastique présentent ladite structure de surface.

11. Feuille en matière plastique selon la revendication 10, **caractérisée en ce que** les rangées en disposition parallèle des deux faces de la feuille en matière plastique forment l'une avec l'autre un angle compris entre 0 et 45°.

12. Feuille en matière plastique selon la revendication 10, **caractérisée en ce que** les rangées en disposition parallèle des deux faces de la feuille en matière plastique forment l'une avec l'autre un angle compris entre 45 et 90°.

13. Feuille en matière plastique selon l'une des revendications 1 à 12, **caractérisée en ce que** les feuilles présentent une brillance inférieure ou égale à 10, déterminée selon DIN 67530.

14. Utilisation de feuille en matière plastique selon l'une des revendications 1 à 14 pour fabriquer des éléments de verre feuilleté.
